# EUROPEAN PATENT SPECIFICATION

(11) **EP 3 499 452 B1**
(45) Date of publication and mention of the grant of the patent: **12.01.2022**
(21) Application number: 17914826.7
(22) Date of filing: 21.11.2017
(51) Int. Cl.: G01C 21/02, G01C 21/24, G01S 3/784, G01S 3/786, G06T 1/20, G06T 7/66

(54) **RAPID GATE IMAGE PROCESSING SYSTEM AND METHOD FOR STAR SENSOR**
SCHNELLES GATE-BILDVERARBEITUNGSSYSTEM UND VERFAHREN FÜR STERNSENSOR
SYSTÈME ET PROCÉDÉ DE TRAITEMENT D'IMAGES RAPIDE POUR UN CAPTEUR D'ÉTOILE

(30) Priority: 20.06.2017 CN 201710470501
(43) Date of publication of application: 19.06.2019
(73) Proprietor: Shanghai Aerospace Control Technology Institute, Shanghai 200109 (CN)
(72) Inventor: ZHOU, Qi, Shanghai 200109 (CN); MAO, Xiaonan, Shanghai 200109 (CN); MA, Yingchao, Shanghai 200109 (CN); YU, Luwei, Shanghai 200109 (CN); ZHENG, Xunjiang, Shanghai 200109 (CN); ZHOU, Yu, Shanghai 200109 (CN); SUN, Shaoyong, Shanghai 200109 (CN); YAN, Xiaojun, Shanghai 200109 (CN); HU, Xiongchao, Shanghai 200109 (CN)
(74) Representative: Sun, Yiming
(86) International application number: PCT/CN2017/112187
(87) International publication number: WO 2018/233200

(56) References cited:
- CN-A- 101 363 733
- CN-A- 102 564 457
- CN-A- 103 968 845
- CN-A- 106 441 282
- CN-A- 106 767 769
- CN-A- 106 767 769
- US-A- 5 815 590
- US-A1- 2014 232 867
- WANG XIAOLIN ET AL: "Hardware Implementation of Fast and Robust Star Centroid Extraction With Low Resource Cost", IEEE SENSORS JOURNAL, IEEE SERVICE CENTER, NEW YORK, NY, US, vol. 15, no. 9, 1 September 2015 (2015-09-01), pages 4857-4865, XP011662700, ISSN: 1530-437X, DOI: 10.1109/JSEN.2015.2428434 [retrieved on 2015-07-07]

## Description

### TECHNICAL FIELD

The present disclosure relates to a star sensor, and in particular, to a star sensor fast tracking window image processing system and method thereof.

### BACKGROUND

A star centroid is a device for measuring attitude of spacecraft with high-accuracy. It is mainly used for measuring three-axis attitude of the spacecraft and navigating the spacecraft, and the accuracy thereof plays an important role in spacecraft attitude measurement, control and reliability.

The accuracy of the star sensor is closely related to the quantity and quality of the star spot for attitude determination. The quantity refers to the effective number of stars for attitude determination, and the quality refers to the centroid positioning accuracy of a single star. The increase in the number of stars for attitude determination is beneficial to reduce a Noise Equivalent Angular (NEA), which reflects ability of the star sensor in reproducing corresponding attitude from a certain optical signal. The majority in actual sky are dim star spots, and increasing the number of stars for attitude determination for the star sensor needs to start from extracting the dim stars. In addition, there may be complex problems such as stray interference, maneuvering blur, and radiated noise when the star sensor is on the orbit. When these problems become serious, the star sensor attitude data will be invalid, which would cause frontier problems in star image processing together with the dim star problem.

In the star tracking mode, the star sensor ASTRO10 of German Jena-Optronik uses the mean value of the outer edge of the tracking window to evaluate the background, subtracts the background to obtain the residual image, and sets the fixed threshold offset to segment the residual image so as to obtain the target.

A paper A Parallel Computing Architecture Based Image Processing Algorithm for Star Sensor" published on "Journal of Astronautics" (2011, 32<3>: 613-619) by Mao Xiaonan et al. proposes an algorithm of extracting star centroid of a star sensor in parallel, which uses 16x16 pixels as sub-regions, and divides the detector image plane into several equal-sized sub-regions in order; the algorithm takes the mean grey value of each sub-region as the local background value of the sub-region, and adds the background value to a fixed threshold offset as a threshold to extract the star centroid. However, regardless of the position of the star centroid, the position of the sub-area is always fixed according to the pre-division, which lacks of flexibility.

CN 103 968 845 A discloses a star sensor using a cooperative CPU/FPGA logic architecture for calculating centroids of an imaged star.

CN 106 767 769 A and paper "Hardware Implementation of Fast and Robust Star Centroid Extraction With Low Resource Cost", by Wang Xiaolin et al, published in IEEE SENSORS JOURNAL, disclose image processing systems wherein a FPGA is programmed to calculate the background noise and characteristic vectors of stars and/or their centroid coordinates. US 5 815 590 A discloses a star sensor image processing using windows of 8*8 pixels size for determining star centroids by a processor reading pixel data gathered from a specialised ASIC circuit.

### SUMMARY

In view of the deficiencies in the prior art, one of the objects of the present disclosure is to provide a star sensor fast tracking window image processing system according to independent claim 1 and a method thereof according to claim 6.

The present disclosure provides a star sensor fast tracking window image processing system and method thereof, comprising a CPU and a FPGA; wherein, the FPGA comprises a tracking window control memory, a tracking window collecting module, a tracking window data memory, a pixel cluster first pixel address memory, and a pixel cluster processing module;
wherein, the CPU is configured to generate tracking window control data according to navigation star positions in a star library for the star sensor, writes the tracking window control data into the tracking widow control memory, and write a first pixel address of a pixel cluster for pixel clusters of collected tracking window into the pixel cluster first pixel address memory;
wherein, the tracking window collecting module is configured to read the tracking window control data in the tracking window control memory, and collect pixel clusters according to the tracking window control data, thereby stores grey values of all pixels in the pixel clusters in the tracking window data memory;
Wherein, the pixel cluster processing module is configured to read the first pixel address of the pixel cluster in the pixel cluster first pixel address memory and extract pixel clusters centered on the navigation star position according to the first pixel address of the pixel cluster, traverse all the pixels of the pixel cluster centered on the navigation star position, calculate mean grey value of all the pixels as an estimated background, then traverse all the pixels of the pixel cluster centered on the navigation star position based on the estimated background, extract characteristic vectors of star centroids;
Wherein, the CPU is further configured to read the characteristic vectors of the star centroids and calculate the star centroids according to the characteristic vectors.

Preferably, the FPGA further comprises a star centroid characteristic vector memory; the star centroid characteristic vector memory is configured to store characteristic vectors of the star centroids.

According to the invention,
the tracking window is constituted of some tracking windows obtained by dividing a detector image plane of the star sensor according to Z×Z pixels, wherein, Z is a positive integer;
the tracking window control data is the control information for the tracking window; the Z×Z pixels form a pixel cluster of the tracking window.

Preferably, the number of tracking window collecting for each navigation star is not less than one, and not more than four.

Preferably, the Z x Z pixels is 8 x 8 pixels.

Preferably, 1 bit in the tracking window control data corresponds to one tracking window, and 0 indicates that the pixel cluster of the tracking window are not required to be collected; 1 indicates that the pixel cluster of the tracking window is required to be collected.

The present disclosure provides a star sensor fast tracking window image processing method by using the star sensor fast tracking window image processing system described above, comprising:
Step S1, generating tracking window control data according to navigation star positions in a star library for the star sensor and writing the tracking window control data into the tracking window control memory;
Step S2, reading the tracking window control data in the tracking window control memory, and storing grey values of all pixels in the pixel clusters in the tracking window data memory;
Step S3, writing the first pixel address of the pixel cluster into the memory;
Step S4, reading the first pixel address of the pixel cluster in the pixel cluster first pixel address memory and extracting the pixel cluster centered on the navigation star position, traversing all the pixels of the pixel cluster, calculating mean grey value of all the pixels as an estimated background, then traversing to all the pixels of the pixel cluster; extracting characteristic vectors of star centroids based on the estimated background. And reading the characteristic vectors of the star centroids and calculating the star centroids' centroids according to the characteristic vectors of the star centroids.

Compared with the prior art, the present disclosure has the following advantageous effects:
1. In the technical field of star sensors, the present disclosure proposes a tracking window image processing method which extracts the centroid of a pixel cluster based on the navigation star for the first time. The FPGA performs the tracking window data collection, the background estimation of the pixel cluster, and calculation of the star centroid characteristic vector. The CPU calculates the star centroid based on the result supplied by FPGA.
2. In the present disclosure, the grey values of all the pixels in the tracking window are used to evaluate the background, i.e, the mean grey value of all the pixels in the tracking window is calculated, and thus the measurement accuracy of the star sensor could be significantly enhanced;
3. The present disclosure fully utilizes the advantages of FPGA parallel processing, which may process several pixel clusters simultaneously and extract the star centroids of all pixel clusters;
4. In the present disclosure, since the tracking window data is collected according to the coordinates of the navigation stars in the star library, and the size of the pixel cluster is small, the mean grey value of the pixel cluster could be directly used as the threshold for extracting star centroids, thereby improving the ability of star sensor for extracting dim stars and enhance the star centroid utilization ratio, thus significantly improving the measurement accuracy of the star sensor and further enhancing stray light resistance of the star sensor.

### BRIEF DESCRIPTION OF THE DRAWINGS

Other features, objects, and advantages of the present disclosure will become apparent by reading the following detailed description to the non-limited embodiments with reference to the drawings.
Fig. 1 is a schematic diagram showing a star sensor fast tracking window image processing system according to the present disclosure;
Fig. 2 is a schematic diagram showing tracking window control according to the present disclosure;
Fig. 3 is a schematic diagram showing tracking window data collection according to the present disclosure;
Fig. 4 is a schematic diagram showing a pixel cluster and the centroid extraction method thereof according to the present disclosure;

### DETAILED DESCRIPTION

The disclosure will now be described in details in connection with the embodiments. The following embodiments are intended to facilitating those skilled in the art to understand the invention, instead of limiting the invention in any way. It should be noted that a number of variations and modifications may be made by those skilled in the art without departing from the inventive concept, all of which fall within the scope of the appended claims.

Taking a star sensor with a resolution of 1024 × 1024 pixels as an example, the size of the tracking window is 8 × 8 pixels, and the detector image plane is divided into 16384 tracking windows. For each detector image plane, up to 32 star spots can be processed. For each star spot, 4 tracking window data at maximum and 1 or 2 tracking window data at least has to be collected according to the navigation star position. A FPGA reserves a storage space for 4 tracking window data for each star spot, that is, 1024×16 bits (pixel grey value is 12 bits).

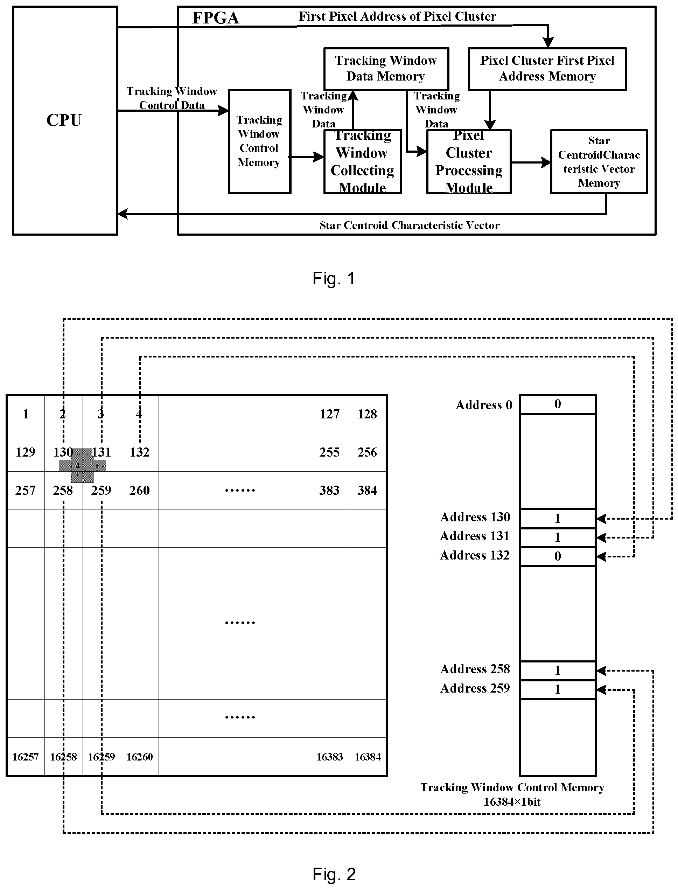

As shown in FIG. 1, the CPU provides tracking window control data to FPGA according to the navigation star position. The FPGA reads the tracking window control data, collects corresponding tracking window image data, and store the data in the corresponding memory. A pixel cluster processing module extracts 8x8 pixel clusters from the collected tracking windows for star centroid extraction according to the first pixel address of the pixel cluster provided by the CPU based on the navigation star position. The FPGA performs background estimation and star centroid calculation based on the pixel cluster, and stores the calculation results in the star centroid characteristic vector memory, which can be accessed by the CPU to calculate the star centroid.

As shown in Fig. 2, the red part in the figure represents the actual star centroid position, and the pixel coordinate labeled as 1 is the navigation star position in the star library (after rounding). According to the navigation star position, a pixel cluster of a 8×8 tracking window can be extracted. Thus, it is necessary to collect the pixel clusters of the four tracking windows labeled 130, 131, 258, and 259, and therefore the addresses corresponding to the four tracking windows are written as 1 in the tracking window control memory, and the address spaces that do not need to collect are written as 0.

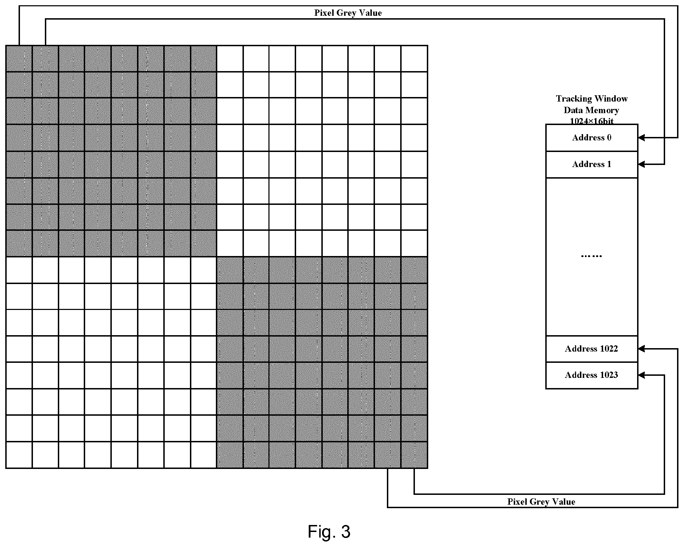

As shown in FIG. 3, four tracking windows labeled 130, 131, 258, and 259 in FIG. 2 are shown, wherein, the FPGA writes all the pixel grey values of the four tracking windows to the memory for subsequent processing.

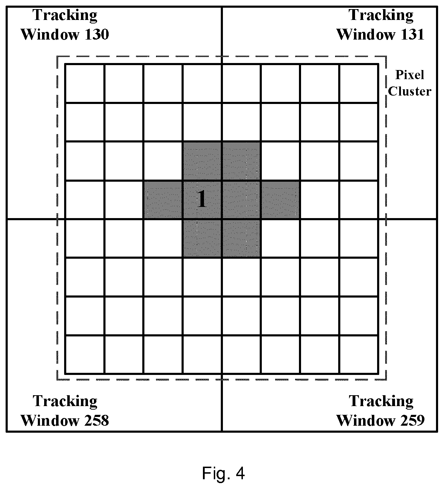

As shown in FIG. 4, according to the pixel cluster first pixel address provided by the CPU, the FPGA takes the navigation star position as a center (the pixel labeled 1 in the drawing), and extracts 8x8 pixel cluster from the collected pixel clusters of the tracking window, traversing the pixel clusters twice, the first traverse is used to estimate the background of the pixel cluster (that is, calculating the mean grey value of all pixels in the pixel cluster); the second traverse is used to calculate characteristic vectors of the star centroid based on the background. The characteristic vectors of star centroids are stored in the memory read by CPU so as to calculate the star centroid.

Specific embodiments of the present disclosure are described as above. It is understood that the present disclosure is not limited to the above specific embodiments, and those skilled in the art may make various of modification and changes within the scope of the appended claims, which will not impact the essential contents of the present disclosure. The embodiments and the features thereof in the present disclosure may be combined in any way.

## Claims

1. A star sensor fast tracking window image processing system, comprising: a CPU and an FPGA; wherein the CPU is configured to generate tracking window control data of a navigation star selected according to navigation star positions in a star library for the star sensor and for calculating a star centroid of the navigation star, the FPGA comprises: a tracking window control memory, a tracking window collecting module configured to read tracking window control data, a tracking window data memory for collecting pixel clusters according to the tracking window control data, and storing grey values of all pixels in the pixel clusters, a pixel cluster first pixel address memory, and a pixel cluster processing module; wherein
tracking windows are constituted by dividing a detector image plane of the star sensor according to ZxZ pixels, wherein, Z is a positive integer;
the tracking window control data is control information for a collected tracking window, the ZxZ pixels forming a pixel cluster of the collected tracking window;
the CPU is configured to write the tracking window control data into the tracking window control memory, and write a first pixel address of a pixel cluster for pixel clusters of collected tracking windows into the pixel cluster first pixel address memory; the tracking window collecting module is configured to read the tracking window control data in the tracking window control memory, and collect pixel clusters according to the tracking window control data;
the pixel cluster processing module is configured to read the first pixel address of the pixel cluster in the pixel cluster first pixel address memory and extract pixel clusters centered on the navigation star position according to the first pixel address of the pixel cluster, traverse all the pixels of the pixel cluster centered on the navigation star position, calculate a mean grey value of all the pixels as an estimated background, then traverse all the pixels of the pixel cluster centered on the navigation star position based on the estimated background, and extract a characteristic vector of a star centroid of the navigation star; and
the CPU is further configured to read the characteristic vector of the star centroid and calculate the star centroid according to the characteristic vector.

2. The star sensor fast tracking window image processing system according to claim 1, wherein the FPGA further comprises a star centroid characteristic vector memory; the star centroid characteristic vector memory is configured to store characteristic vectors of the star centroids of the navigation stars according to the navigation star positions in the star library.

3. The star sensor fast tracking window image processing system according to claim 1, wherein the minimum number of the collected tracking windows corresponding to each navigation star is one, and the maximum number of the collected tracking windows corresponding to each navigation star is four.

4. The star sensor fast tracking window image processing system according to claim 1, wherein the Z x Z pixels is 8 x 8 pixels.

5. The star sensor fast tracking window image processing system according to claim 1, wherein a bit in the tracking window control data corresponds to control information of one tracking window, wherein a 0 in the bit indicates that the pixel cluster of the tracking window are not required to be collected; and a 1 in the bit indicates that the pixel cluster of the tracking window is required to be collected.

6. A star sensor fast tracking window image processing method by using the star sensor fast tracking window image processing system according any one of claims 1 to 5, comprising:
Step S1, selecting a navigation star and generating by the CPU tracking window control data according to navigation star positions in a star library for the selected navigation star and writing the tracking window control data into the tracking window control memory of the FPGA;
Step S2, in the FPGA, reading the tracking window control data in the tracking window control memory, and storing grey values of all pixels in the pixel clusters in the tracking window data memory;
Step S3, in the FPGA, writing the first pixel address of the pixel cluster into the memory;
Step S4, in the FPGA, reading the first pixel address of the pixel cluster in the pixel cluster first pixel address memory and extracting the pixel cluster centered on the navigation star position, traversing all the pixels of the pixel cluster, calculating mean grey value of all the pixels as an estimated background, then traversing all the pixels of the pixel cluster; extracting a characteristic vector of a star centroid of the navigation star based on the estimated background; and in the CPU, reading the characteristic vector of the star centroid and calculating the star centroid according to the characteristic vector of the star centroid.

## Patentansprüche

1. System für schnelle Sternsensor-Verfolgungsfenster-Bildverarbeitung, umfassend: eine CPU und ein FPGA; wobei die CPU konfiguriert ist, Verfolgungsfenster-Steuerdaten eines Navigationssterns, der gemäß Sternpositionen in einer Sternbibliothek ausgewählt wird, für den Sternsensor zu erzeugen, und einen Sternschwerpunkt des Navigationssterns zu berechnen, wobei das FPGA Folgendes umfasst: einen Verfolgungsfenster-Steuerspeicher, ein Verfolgungsfenster-Erfassungsmodul, das konfiguriert ist, Verfolgungsfenster-Steuerdaten zu lesen, einen Verfolgungsfenster-Datenspeicher zum Erfassen von Pixelclustern gemäß den Verfolgungsfenster-Steuerdaten und zum Speichern von Grauwerten aller Pixel in den Pixelclustern, einen Pixelcluster-Erstpixeladressenspeicher und ein Pixelcluster-Verarbeitungsmodul; wobei
Verfolgungsfenster aufgebaut werden durch Unterteilen einer Detektor-Bildebene des Sternsensors gemäß ZxZ Pixeln, wobei Z eine positive ganze Zahl ist;
die Verfolgungsfenster-Steuerdaten Steuerinformationen für ein erfasstes Verfolgungsfenster sind, wobei die Z×Z Pixel einen Pixelcluster des erfassten Verfolgungsfensters bilden;
die CPU konfiguriert ist, die Verfolgungsfenster-Steuerdaten in den Verfolgungsfenster-Steuerspeicher zu schreiben, und eine Erstpixeladresse eines Pixelclusters für Pixelcluster von erfassten Verfolgungsfenstern in den Pixelcluster-Erstpixeladressenspeicher zu schreiben; wobei das Verfolgungsfenster-Erfassungsmodul konfiguriert ist, die Verfolgungsfenster-Steuerdaten in dem Verfolgungsfenster-Steuerspeicher zu lesen, und Pixelcluster gemäß den Verfolgungsfenster-Steuerdaten zu erfassen;
das Pixelcluster-Verarbeitungsmodul konfiguriert ist, die Erstpixeladresse des Pixelclusters in dem Pixelcluster-Erstpixeladressenspeicher zu lesen, und Pixelcluster, die auf die Navigationssternposition zentriert sind, gemäß der Erstpixeladresse des Pixelclusters zu extrahieren, alle Pixel des Pixelclusters, der auf die Navigationssternposition zentriert ist, zu durchlaufen, einen mittleren Grauwert aller Pixel als einen geschätzten Hintergrund zu berechnen, anschließend alle Pixel des Pixelclusters, der auf die Navigationssternposition zentriert ist, basierend auf dem geschätzten Hintergrund zu durchlaufen, und einen Eigenvektor eines Sternschwerpunkts des Navigationssterns zu extrahieren; und
die CPU ferner konfiguriert ist, den Eigenvektor des Sternschwerpunkts zu lesen, und den Sternschwerpunkt gemäß dem Eigenvektor zu berechnen.

2. System für schnelle Sternsensor-Verfolgungsfenster-Bildverarbeitung nach Anspruch 1, wobei das FPGA ferner einen Sternschwerpunkt-Eigenvektorspeicher umfasst;
wobei der Sternschwerpunkt-Eigenvektorspeicher konfiguriert ist, Eigenvektoren der Sternschwerpunkte der Navigationssterne gemäß den Navigationssternpositionen in der Sternbibliothek zu speichern.

3. System für schnelle Sternsensor-Verfolgungsfenster-Bildverarbeitung nach Anspruch 1, wobei die Mindestanzahl der erfassten Verfolgungsfenster, die jedem Navigationsstern entsprechen, eins ist, und die Höchstanzahl der erfassten Verfolgungsfenster, die jedem Navigationsstern entsprechen, vier ist.

4. System für schnelle Sternsensor-Verfolgungsfenster-Bildverarbeitung nach Anspruch 1, wobei die ZxZ Pixel 8x8 Pixel sind.

5. System für schnelle Sternsensor-Verfolgungsfenster-Bildverarbeitung nach Anspruch 1, wobei ein Bit in den Verfolgungsfenster-Steuerdaten Steuerinformationen von einem Verfolgungsfenster entspricht, wobei eine 0 in dem Bit anzeigt, dass der Pixelcluster des Verfolgungsfensters nicht erfasst werden muss; und wobei eine 1 in dem Bit anzeigt, dass der Pixelcluster des Verfolgungsfensters erfasst werden muss.

6. Verfahren für schnelle Sternsensor-Verfolgungsfenster-Bildverarbeitung unter Verwendung des Systems für schnelle Sternsensor-Verfolgungsfenster-Bildverarbeitung nach einem der Ansprüche 1 bis 5, umfassend:
Schritt S1, Auswählen eines Navigationssterns und Erzeugen, durch die CPU, von Verfolgungsfenster-Steuerdaten gemäß Navigationssternpositionen in einer Sternbibliothek für den ausgewählten Navigationsstern, und Schreiben der Verfolgungsfenster-Steuerdaten in den Verfolgungsfenster-Steuerspeicher des FPGA;
Schritt S2, in dem FPGA, Lesen der Verfolgungsfenster-Steuerdaten in dem Verfolgungsfenster-Steuerspeicher, und Speichern von Grauwerten aller Pixel in den Pixelclustern in dem Verfolgungsfenster-Datenspeicher;
Schritt S3, in dem FPGA, Schreiben der Erstpixeladresse des Pixelclusters in den Speicher;
Schritt S4, in dem FPGA, Lesen der Erstpixeladresse des Pixelclusters in dem Pixelcluster-Erstpixeladressenspeicher und Extrahieren des Pixelclusters, der auf die Navigationssternposition zentriert ist, Durchlaufen aller Pixel des Pixelclusters, Berechnen eines mittleren Grauwerts aller Pixel als einen geschätzten Hintergrund, anschließend Durchlaufen aller Pixel des Pixelclusters; Extrahieren eines Eigenvektors eines Sternschwerpunkts des Navigationssterns basierend auf dem geschätzten Hintergrund; und, in der CPU, Lesen des Eigenvektors des Sternschwerpunkts und Berechnen des Sternschwerpunkts gemäß dem Eigenvektor des Sternschwerpunkts.

## Revendications

1. Système de traitement d'image à fenêtre de suivi rapide de capteur stellaire, comprenant : une CPU et une FPGA, dans lequel la CPU est configurée pour générer des données de commande de fenêtre de suivi d'une étoile de navigation selon des positions d'étoiles de navigation dans une bibliothèque d'étoiles pour le capteur stellaire et pour calculer un centroïde stellaire de l'étoile de navigation, la FPGA comprend : une mémoire de commande de fenêtre de suivi, un module de collecte de fenêtre de suivi configuré pour lire des données de commande de fenêtre de suivi, une mémoire de données de fenêtre de suivi pour collecter des groupes de pixels selon les données de commande de fenêtre de suivi, et stocker en mémoire des valeurs de gris de tous les pixels dans les groupes de pixels, une mémoire de première adresse de pixels de groupe de pixels, et un module de traitement de groupe de pixels ; dans lequel
les fenêtres de suivi sont constituées en divisant un plan d'image de détecteur du capteur stellaire selon les pixels ZxZ, dans lequel Z est un entier positif ;
les données de commande de fenêtre de suivi sont des informations de commande pour une fenêtre de suivi collectée, les pixels ZxZ formant un groupe de pixels de la fenêtre de suivi collectée ;
la CPU est configurée pour écrire les données de commande de fenêtre de suivi dans la mémoire de commande de fenêtre de suivi, et écrire une première adresse de pixels d'un groupe de pixels pour des groupes de pixels de fenêtres de suivi collectées dans la mémoire de première adresse de pixels de groupe de pixels ; le module de collecte de fenêtre de suivi est configuré pour lire les données de commande de fenêtre de suivi dans la mémoire de commande de fenêtre de suivi, et collecter des groupes de pixels selon les données de commande de fenêtre de suivi ;
le module de traitement de groupe de pixels est configuré pour lire la première adresse de pixels du groupe de pixels dans la mémoire de première adresse de pixels de groupe de pixels et extraire des groupes de pixels centrés sur la position d'étoile de navigation selon la première adresse de pixels du groupe de pixels, traverser tous les pixels du groupe de pixels centré sur la position d'étoile de navigation, calculer une valeur de gris moyenne de tous les pixels en tant qu'un fond estimé, puis traverser tous les pixels du groupe de pixels centré sur la position d'étoile de navigation en se basant sur le fond estimé, et extraire un vecteur caractéristique d'un centroïde d'étoile de l'étoile de navigation, et
la CPU est en outre configurée pour lire le vecteur caractéristique du centroïde d'étoile et calculer le centroïde d'étoile selon le vecteur caractéristique.

2. Système de traitement d'image à fenêtre de suivi rapide de capteur stellaire selon la revendication 1, dans lequel la FGPA comprend en outre une mémoire de vecteur de caractéristique de centroïde d'étoile ;
la mémoire de vecteur de caractéristique de centroïde d'étoile est configurée pour stocker en mémoire des vecteurs caractéristiques des centroïdes d'étoile des étoiles de navigation selon les positions d'étoiles de navigation dans la bibliothèque d'étoiles.

3. Système de traitement d'image à fenêtre de suivi rapide de capteur stellaire selon la revendication 1, dans lequel le nombre minimal des fenêtres de suivi collectées correspondant à chaque navigation est de un, et le nombre maximal des fenêtres de suivi collectées correspondant à chaque étoile de navigation est de quatre.

4. Système de traitement d'image à fenêtre de suivi rapide de capteur stellaire selon la revendication 1, dans lequel les pixels ZxZ sont des pixels 8x8.

5. Système de traitement d'image à fenêtre de suivi rapide de capteur stellaire selon la revendication 1, dans lequel un bit dans les données de commande de fenêtre de suivi correspond à des informations de commande d'une fenêtre de suivi, dans lequel un 0 dans le bit indique que le groupe de pixels de la fenêtre de suivi n'a pas besoin d'être collecté, et un 1 dans le bit indique que le groupe de pixels de la fenêtre de suivi a besoin d'être collecté.

6. Procédé de traitement d'image à fenêtre de suivi rapide de capteur stellaire en utilisant le système de traitement d'image à fenêtre de suivi rapide de capteur stellaire selon l'une quelconque des revendications 1 à 5, comprenant :
étape S1 : sélectionner une étoile de navigation et générer par la CPU des données de commande de fenêtre de suivi selon des positions d'étoiles de navigation dans une bibliothèque d'étoiles pour l'étoile de navigation sélectionnée et écrire les données de commande de fenêtre de suivi dans la mémoire de commande de fenêtre de suivi de la FPGA ;
étape S2 : dans la FPGA, lire les données de commande de fenêtre de suivi dans la mémoire de commande de fenêtre de suivi, et stocker des valeurs de gris de tous les pixels dans les groupes de pixels dans la mémoire de données de fenêtre de suivi ;
étape S3 : dans la FPGA, lire la première adresse de pixel du groupe de pixels dans la mémoire
étape S4 : dans la FPGA, lire la première adresse de pixels du groupe de pixels dans le groupe de pixels et extraire le groupe de pixels centré sur la position d'étoile de navigation, traverser tous les pixels du groupe de pixels, calculer une valeur de gris moyenne de tous les pixels en tant qu'un fond estimé, puis traverser tous les pixels du groupe de pixels ; extraire un vecteur caractéristique d'un centroïde d'étoile de l'étoile de navigation en se basant sur le fond estimé ; et dans la CPU, lire et calculer le vecteur caractéristique du centroïde d'étoile et calculer le centroïde d'étoile selon le vecteur caractéristique du centroïde d'étoile.
